# EUROPEAN PATENT APPLICATION

(11) **EP 4 696 985 A1**
(43) Date of publication of application: **18.02.2026**
(21) Application number: 24818515.9
(22) Date of filing: 24.05.2024
(51) Int. Cl.: G01C 21/00

(54) **METHOD AND APPARATUS FOR GENERATING MOTION TRAJECTORY OF DEVICE, DEVICE, AND MEDIUM**

(30) Priority: 08.06.2023 CN 202310678626
(71) Applicant: Meta-Bounds Inc., Zhuhai, Guangdong 519000 (CN)
(72) Inventor: PENG, Yujiang, Zhuhai, Guangdong (CN); YANG, Peng, Zhuhai, Guangdong (CN)
(74) Representative: Agca Kizil, Tugce
(86) International application number: PCT/CN2024/095248
(87) International publication number: WO 2024/250982

(57) **Abstract**

A method and apparatus for generating a motion trajectory of a device, a device, and a medium are provided. The method for generating a motion trajectory of a device includes: obtaining a first coordinate of a wearable device, and obtaining step data and direction data generated by the wearable device; determining a second coordinate of the wearable device based on the step data and the direction data; and generating a motion trajectory of the wearable device based on the first coordinate and the second coordinate.

## Description

This Application claims the benefit of priority to Chinese Application No. 202310678626.7 entitled "METHOD AND APPARATUS FOR GENERATING A MOTION TRAJECTORY OF A DEVICE, DEVICE, AND MEDIUM", filed with the China National Intellectual Property Administration on Jun. 8, 2023, the entire contents of which are incorporated by reference herein.

### Technical Field

The present disclosure relates to the technical field of computer technology, in particular to a method and apparatus for generating a motion trajectory of a device, a device, and a medium.

### Background Art

With the development of science and technology, wearable devices have been gradually applied to people's lives. Wearable devices, which are a type of equipment, include smart glasses, head-mounted displays, audio devices, etc. When the wearable device is worn on a user's head, the wearable device generates a motion trajectory based on GPS functionality, and processes a large amount of data when generating the motion trajectory of a device, such as navigation data, accelerometer data, gyroscope data, and magnetometer data, which causes the device to consume more energy when generating the motion trajectory.

### Summary of the Invention

Embodiments of the present disclosure provide a method and apparatus for generating a motion trajectory of a device, a device, and a medium, thus making full use of the processing of the step data and the direction data, reducing the processing of other data, so as to reduce data volume and computational load in the method for generating the motion trajectory of the device, improve the efficiency of generating the motion trajectory of the device, and reduce the energy consumption of the device when generating the motion trajectory, extending the battery life of the device.

Other characteristics and advantages of the present disclosure will become apparent by the following detailed description, or can be learned in part by the practice of the present disclosure.

According to one aspect of an embodiment of the present disclosure, a method for generating a motion trajectory of a device is provided, including:
obtaining a first coordinate of a wearable device, and obtaining step data and direction data generated by the wearable device;
determining a second coordinate of the wearable device based on the step data and the direction data;
and generating a motion trajectory of the wearable device based on the first coordinate and the second coordinate.

In some embodiments of the present disclosure, determining the second coordinate of the wearable device based on the step data and the direction data includes:
calculating a current directional variation based on the direction data; and
determining the second coordinate based on the current directional variation, the step data, and the first coordinate.

In some embodiments of the present disclosure, calculating the current directional variation based on the direction data includes:
determining a second angle indicating an orientation of the wearable device at the current position relative to a preset direction, and determining a first angle indicating an orientation of the wearable device corresponding to the user at a previous step relative to the preset direction; and
calculating the current directional variation based on the first angle and the second angle.

In some embodiments of the present disclosure, determining the second coordinate based on the current directional variation, the step data, and the first coordinate includes:
obtaining a first component and a second component of the first coordinate; and
determining the second coordinate based on the first component, the second component, and a component formed by a walking stride length in the step data and the current directional variation.

In some embodiments of the present disclosure, the method further includes:
obtaining an acceleration value of the wearable device at a preset number of steps; and
determining the walking stride length of the wearable device based on the acceleration value and a preset corresponding relationship.

In some embodiments of the present disclosure, the method further includes:
backtracking the motion trajectory of the wearable device to output a return trajectory between a first return node and a second return node.

In some embodiments of the present disclosure, the method includes:
obtaining a walking stride length stored in the motion trajectory of the wearable device; and
when the walking stride length is consistent with a walking stride length of a current user, outputting the motion trajectory of the wearable device.

In some embodiments of the present disclosure, the method further includes:
obtaining a current node coordinate of the wearable device in the motion trajectory of the wearable device, and obtaining a current coordinate of an interactive device interacting with the wearable device; and
determining a navigation trajectory between the current coordinate of the interactive device and the current node coordinate based on the current node coordinate and the current coordinate of the interactive device, and transmitting the navigation trajectory to the interactive device.

According to one aspect of an embodiment of the present disclosure, an apparatus for generating a motion trajectory of a device, including:
an obtaining module, configured to obtain a first coordinate of a wearable device, and obtain step data and direction data generated by the wearable device;
a coordinate module, configured to determine a second coordinate of the wearable device based on the step data and the direction data;
a trajectory module, configured to generate a motion trajectory of the wearable device based on the first coordinate and the second coordinate

According to one aspect of an embodiment of the present disclosure, a computer-readable medium storing a computer program is provided, when the computer program is executed by a processor, the processor is configured to perform a method for generating a motion trajectory of a device as described in any one of above embodiments of the present disclosure.

According to one aspect of an embodiment of the present disclosure, an electronic device is provided, including: one or more processors; and a storage device for storing one or more programs, when the one or more programs are executed by the one or more processors, the one or more processors are configured to perform a method for generating a motion trajectory of a device as described in any one of above embodiments of the present disclosure.

According to one aspect of an embodiment of the present disclosure, a computer program product or a computer program is provided. The computer program product or the computer program includes a computer instruction stored in a computer-readable storage medium. A processor of a computer device reads the computer instruction from the computer-readable storage medium, and the processor executes the computer instruction, so that the computer device performs a method for generating a motion trajectory of a device as described in any one of above embodiments of the present disclosure.

In technical solutions provided in some embodiments of the present disclosure, a first coordinate of a wearable device is obtained, and step data and direction data generated by the wearable device are obtained; a second coordinate of the wearable device is determined based on the step data and the direction data; a motion trajectory of the wearable device is generated based on the first coordinate and the second coordinate; second coordinate of the wearable device is determined based on the step data and the direction data, which makes full use of the processing of the step data and the direction data, reduces the processing of other data, so as to reduce data volume and computational load in the method for generating the motion trajectory of the device, improve the efficiency of generating the motion trajectory of the device, and reduce the energy consumption of the device when generating the motion trajectory, extending the battery life of the device.

It should be understood that the foregoing general description and the following detailed description are exemplary and explanatory and are not limited to the present disclosure.

### Brief Description of the Drawings

The accompanying drawings, which are incorporated in and constitute a part of the specification, illustrate embodiments consistent with the present disclosure and, together with the description, are used to explain the principles of the present disclosure. Obviously, the drawings described below are provided for some embodiments of the present disclosure, and based on these drawings, those skilled in the art may obtain other drawings without any creative endeavor. In the drawings:
FIG. 1 is a schematic flowchart illustrating a method for generating a motion trajectory of a device according to an embodiment of the present disclosure.
FIG. 2 is a schematic flowchart illustrating step S120 in FIG. 1.
FIG. 3 is a block diagram illustrating an apparatus for generating a motion trajectory of a device according to an embodiment of the present disclosure.
FIG. 4 is a structural diagram illustrating a computer system of a wearable device suitable for performing an embodiment of the present disclosure.

### Detailed Description of Embodiments

Example embodiments will now be described more fully with reference to the accompanying drawings. However, the embodiments can be implemented in various forms and should not be construed as limited to the examples set forth herein. Rather, the embodiments are provided so that the present disclosure will be comprehensive and complete, and will fully convey the concept of the example embodiments to those skilled in the art.

Furthermore, the described features, structures, or characteristics can be combined in any suitable manner in one or more embodiments. In the following description, numerous specific details are provided to give a thorough understanding of embodiments of the present disclosure. However, those skilled in the art will recognize that the technical solutions of the present disclosure can be practiced without one or more of the specific details, or with other methods, components, devices, steps, etc. In other instances, well-known methods, devices, implementations, or operations are not shown or described in detail to avoid obscuring aspects of the present disclosure.

The block diagrams shown in the drawings are functional entities and do not necessarily correspond to physically separate entities. That is, the functional entities can be performed in software, or in one or more hardware modules or integrated circuits, or in different networks and/or processor devices and/or microcontroller devices.

The flowcharts shown in the drawings are illustrative and do not necessarily include all contents and operations/steps, nor must they be executed in the order described. For example, some operations/steps can be decomposed, while some operations/steps can be combined or partially combined, so the actual execution order can be changed according to actual circumstances.

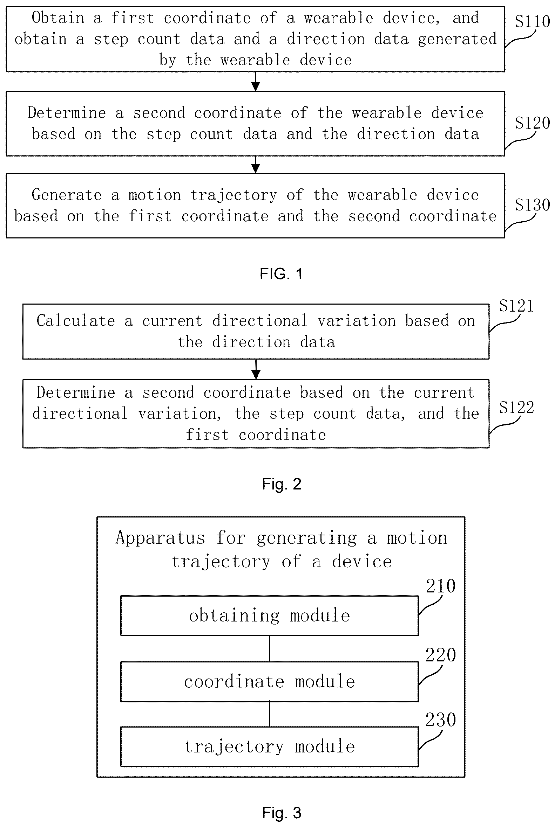

FIG. 1 is a schematic flowchart illustrating a method for generating a motion trajectory of a device according to an embodiment of the present disclosure. The method can be applied to an electronic device, which can include but is not limited to a wearable device such as an augmented reality (AR) electronic device, a virtual reality (VR) electronic device, or a mixed reality (MR) electronic device.

Referring to FIG. 1, the method for generating the motion trajectory of the device includes at least steps S110 to S130, which are described in detail as follows (hereinafter, the method will be described by way of example as applied to a wearable device).

In step S110, obtain a first coordinate of a wearable device, and obtain step data and direction data generated by the wearable device.

In an embodiment of the present disclosure, the wearable device may be smart glasses. The first coordinate of the wearable device represents a current coordinate of the wearable device. In this case, a current position of the wearable device in a current scene is located, and the location is labeled with a coordinate according to a coordinate system of the current scene to facilitate determining the first coordinate of the wearable device. Optionally, the first coordinate may represent a starting-point coordinate of the motion trajectory of the wearable device, while a second coordinate represents an ending-point coordinate of the motion trajectory of the wearable device. In this case, the first coordinate is a previous-step coordinate of the second coordinate, and the second coordinate is determined by combining the first coordinate, the step data, and the direction data.

In an embodiment of the present disclosure, the wearable device can obtain the first coordinate when receiving an acquisition instruction for obtaining a coordinate. The acquisition instruction can be triggered by a user or automatically triggered when the wearable device is in a specific scenario. For example, when the wearable device activates a positioning function, the acquisition instruction can be automatically triggered. When the wearable device is located in a parking lot, a shopping mall, etc., it can be considered that the wearable device needs to record the movement trajectory.

The step data and the direction data generated by the wearable device are obtained. The step data is determined by a pedometer arranged into or external to the wearable device, and the direction data is determined by a magnetometer arranged into or external to the wearable device. In this case, the step data and the direction data generated by the wearable device are fully utilized to reduce the processing of other data, so as to reduce data volume and computational load in the method for generating the motion trajectory of the device.

In this case, the first coordinate of the wearable device is obtained first, and then the step data and the direction data are obtained, which can be adjusted according to an actual scenario. The step data and the direction data correspond to the same timestamp.

When the wearable device is worn by a user, a position of the wearable device is adjusted as the user walks. The wearable device may be configured with an accelerometer so that the wearable device can be determined to be in a position change state through an acceleration data output by the accelerometer.

Referring to FIG. 2, in step S120, determine a second coordinate of the wearable device based on the step data and the direction data.

In an embodiment of the present disclosure, a second coordinate of the wearable device is determined based on the step data and the direction data, which makes full use of the processing of the step data and the direction data, reduces the processing of other data, so as to reduce data volume and computational load in the method for generating the motion trajectory of the device, improve the efficiency of generating the motion trajectory of the device, and reduce the energy consumption of the device when generating the motion trajectory, extending the battery life of the device.

The specific steps are as follows:
Step S121: Calculate a current directional variation based on the direction data.

The current directional variation is determined based on changes of the direction data. In this case, a second angle indicating an orientation of the wearable device at the current position relative to a preset direction is determined, and a first angle indicating an orientation of the wearable device corresponding to the user at a previous step relative to the preset direction is determined; the current directional variation is calculated based on the first angle and the second angle. In this case, an angle difference between the first angle and the second angle is the current directional variation, so as to determine a direction difference between a current position and a previous position of the wearable device through the current directional variation.

Optionally, the preset direction is a north direction, a right direction of a horizontal direction is a positive direction of an x-axis, a forward direction of the horizontal direction is a positive direction of a y-axis, and an upward direction of a vertical direction is a positive direction of a z-axis. Outputs of the magnetometer of the wearable device in the three axial directions are bx, by, and bz, respectively. Then, at a (k-1)th step, the second angle indicating an orientation of the wearable device at the current position relative to the north direction is arctan(bxₖ/byₖ), and the first angle indicating an orientation of the wearable device corresponding to the user relative to the north direction at a previous step of the (k-1)th step is arctan(bxₖ₋₁/byₖ₋₁). Thus, the directional variation θ of a k-th step relative to the (k-1)th step is: θ = arctan(bxₖ/byₖ) - arctan(bxₖ₋₁/byₖ₋₁).

Step S122: Determine a second coordinate based on the current directional variation, the step data, and the first coordinate.

In an embodiment of the present disclosure, the second coordinate is determined based on the first coordinate in combination with the current directional variation and the step data. In this case, a first component and a second component of the first coordinate are obtained; the second coordinate is determined based on the first component, the second component, and a component formed by a walking stride length in the step data and the current directional variation. The step data includes the number of steps and a walking stride length of each step. Optionally, the first component may be an abscissa of the first coordinate, and the second component may be an ordinate of the first coordinate.

A first component of the second coordinate is xₖ, and a second component of the second coordinate is yₖ. In this case, the first component of the second coordinate is determined by the first component xₖ₋₁ of the first coordinate, a cosine function cos(θ) of the current directional variation, and the walking stride length L at the current position. A calculation formula for the first component of the second coordinate is xₖ=xₖ₋₁ + L*cos(θ).

The second component of the second coordinate is determined by the second component yₖ₋₁ of the first coordinate, a sine function sin(θ) of the current directional variation, and the walking stride length L at the current position. A calculation formula for the second component of the second coordinate is yₖ =yₖ₋₁+L*sin(θ). Thus, through the directional variation θ of the k-th step relative to the (k-1)th step, a relationship between the coordinate of the k-th step and the coordinate of the (k-1)th step can be calculated as: (xₖ, yₖ)= (xₖ₋₁ + L*cos(θ), yₖ₋₁+L*sin(θ)). Optionally, the walking stride length of the same user is relatively fixed.

Thus, the current coordinate is used as a reference coordinate, and the current directional variation and walking stride length are introduced under the reference coordinate to determine a coordinate of a next step, to make full use of the first coordinate, the step data, and the direction data of the wearable device to determine the second coordinate of the wearable device, so as to generate the motion trajectory of the device based on the first coordinate of the wearable device and the second coordinate of the wearable device, and reduce the processing of other data, thus reducing data volume and computational load in the method for generating the motion trajectory of the device, improving the efficiency of generating the motion trajectory of the device, and reducing the energy consumption of the device when generating the motion trajectory, to extend the battery life of the device.

In step S130, generate a motion trajectory of the wearable device based on the first coordinate and the second coordinate.

In an embodiment of the present disclosure, the first coordinate and the second coordinate are connected, and a curve degree of a line segment between the first coordinate and the second coordinate is adjusted along the directional variation, so as to generate the motion trajectory of the wearable device based on the first coordinate and the second coordinate. Optionally, the motion trajectory of the wearable device represents a motion trajectory between two position points of the wearable device, the first coordinate is used as a coordinate of a starting point of the motion trajectory of the wearable device, and the second coordinate is used as a coordinate of an end point of the motion trajectory. In this case, the motion trajectory of the wearable device is configured with a plurality of nodes, and each node corresponds to a position point of the wearable device during walking.

Additionally, the motion trajectory of the wearable device can be backtracked after being generated to form a backtracking trajectory, and a current user of the wearable device is guided to return based on the backtracking trajectory. In this case, the motion trajectory of the wearable device is backtracked, and a first return node and a second return node in the motion trajectory of the wearable device are marked. The first return node is a starting point of a return trajectory of the wearable device, and the first return node can be a current position of the wearable device. The second return node is an end point of the return trajectory of the wearable device, and the second return node can be a pre-stored point of interest in the wearable device. By marking the first return node and the second return node in the motion trajectory of the wearable device, the return trajectory between the first return node and the second return node is output, so as to guide the current user of the wearable device to return through the return trajectory.

When a current user of the wearable device returns, the number of steps required to walk from the first return node to the second return node and the walking stride length of each step are determined based on the step data of the return trajectory, and an orientation of the current user of the wearable device is adjusted in a timely time based on the directional variation in each step.

Further, when backtracking the motion trajectory of the wearable device, a magnetic field strength of the current position is compared with magnetic field strengths of front-N steps and rear-N steps of a corresponding position in the return trajectory, and the number of steps with a smallest magnetic field strength difference is used as the number of steps corresponding to the current position in the trajectory, so as to correct the return trajectory, reduce the error of backtracking the motion trajectory of the wearable device, and improve the accuracy of the backtracking trajectory. Optionally, N steps are preset steps. Optionally, a magnetic field strength of the current position is compared with magnetic field strengths of front-N steps and rear-N steps of a corresponding position in the return trajectory, and a plurality of magnetic field strength differences are formed. The plurality of the magnetic field strength differences are compared to determine the smallest magnetic field strength difference, and determine the number of steps corresponding to the smallest magnetic field strength difference.

In another embodiment of the present disclosure, an acceleration value of the wearable device at a preset number of steps is obtained; the walking stride length of the wearable device is determined based on the acceleration value and a preset corresponding relationship, so as to determine a walking distance of the wearable device in each step. The preset corresponding relationship is trained based on previous acceleration values and previous walking stride lengths of the wearable device. Optionally, the preset number of steps is 5 steps or 10 steps.

In this case, a walking stride length stored in the motion trajectory of the wearable device is obtained. Each user of the wearable device has a corresponding walking stride length. By comparing the walking stride lengths, it can be determined whether they are the same user or multiple users with similar walking stride length. When the walking stride length is consistent with a walking stride length of a current user, the motion trajectory of the wearable device is output. Since the walking stride length is consistent with the walking stride length of the current user, the walking stride lengths of the two users are consistent, and the motion trajectory of the wearable device can be used as a basis for guiding the motion trajectory of two users to backtrack, so as to guide a return trajectory of another user based on the motion trajectory of the wearable device, and output the motion trajectory of the wearable device, thus facilitating the sharing of the motion trajectory of the wearable device. Optionally, the walking stride length is the walking stride length stored in the motion trajectory of the wearable device.

Further, a current node coordinate of the wearable device in the motion trajectory of the wearable device is obtained, and a current coordinate of an interactive device interacting with the wearable device is obtained. A navigation trajectory between the current coordinate of the interactive device and the current node coordinate is determined based on the current node coordinate and the current coordinate of the interactive device, and the navigation trajectory is transmitted to the interactive device. The navigation trajectory between the current coordinate of the interactive device and the current node coordinate is determined based on the current node coordinate and the current coordinate of the interactive device, so as to guide a user of the interactive device to move toward a user of the wearable device according to the navigation trajectory, to achieve walking guidance between the two users. Optionally, the interactive device and the wearable device can interact through Bluetooth connection, wireless connection, communication connection, etc., to facilitate the transmission of coordinate signals. The interactive device can be a wearable device or a terminal device, etc.

In this case, the navigation trajectory can guide the user of the interactive device to walk. Since the navigation trajectory guides the user of the interactive device to walk mainly based on the processing of the step data and the direction data, and while making full use of a pedometer and a magnetometer, the wearable device can also guide the navigation trajectory in a scenario without GPS signals, an indoor scenario, or a parking lot scenario.

In this case, the motion trajectory is backtracked through the step data and the direction data, and the step data and the direction data can be used in various scenarios without being affected by GPS signals, and reduces the processing of other data, so as to reduce data volume and computational load in the method for generating the motion trajectory of the device, improve the efficiency of generating the motion trajectory of the device, and reduce the energy consumption of the device when generating the motion trajectory, to extend the battery life of the device.

The following introduces an embodiment of an apparatus of the present disclosure, which can be used to execute the method for generating the motion trajectory of the device in any one of the above embodiments of the present disclosure. For details not disclosed in the embodiment of the apparatus of the present disclosure, please refer to the embodiments of the method for generating the motion trajectory of the device in the present disclosure.

FIG. 3 is a block diagram illustrating an apparatus for generating a motion trajectory of a device according to an embodiment of the present disclosure.

Referring to FIG. 3, an apparatus for generating a motion trajectory of a device according to an embodiment of the present disclosure includes:
an obtaining module 210, configured to obtain a first coordinate of a wearable device, and obtain step data and direction data generated by the wearable device;
a coordinate module 220, configured to determine a second coordinate of the wearable device based on the step data and the direction data;
a trajectory module 230, configured to generate a motion trajectory of the wearable device based on the first coordinate and the second coordinate.

In an embodiment of the present disclosure, the coordinate module 220 is further configured to:
calculate a current directional variation based on the direction data;
determine a second coordinate based on the current directional variation, the step data, and the first coordinate.

In an embodiment of the present disclosure, the coordinate module 220 is further configured to: determine a second angle indicating an orientation of the wearable device at the current position relative to a preset direction, and determine a first angle indicating an orientation of the wearable device corresponding to the user at a previous step relative to the preset direction; and calculate the current directional variation based on the first angle and the second angle.

In an embodiment of the present disclosure, the coordinate module 220 is further configured to: obtain a first component and a second component of the first coordinate; determine the second coordinate based on the first component, the second component, and a components formed by a walking stride length in the step data and the current directional variation.

In an embodiment of the present disclosure, the trajectory module 230 is further configured to: obtain an acceleration value of the wearable device at a preset number of steps;
and determine a walking stride length of the wearable device based on the acceleration value and a preset corresponding relationship.

In an embodiment of the present disclosure, the trajectory module 230 is further configured to: backtrack the motion trajectory of the wearable device to output a return trajectory between a first return node and a second return node.

In an embodiment of the present disclosure, the trajectory module 230 is further configured to: obtain a walking stride length stored in the motion trajectory of the wearable device; when the walking stride length is consistent with a walking stride length of a current user, output the motion trajectory of the wearable device to the current user.

In an embodiment of the present disclosure, the trajectory module 230 is further configured to: obtain a current node coordinate of the wearable device in the motion trajectory of the wearable device; determine a navigation trajectory of other users moving to the current node coordinate based on the current node coordinate and a coordinate of other user.

In an embodiment of the present disclosure, an electronic device is also provided. The electronic device includes:
one or more processors; and
a storage device for storing one or more programs. When the one or more programs are executed by the one or more processors, the one or more processors are configured to execute the one or more programs to cause the one or more processors to perform the method for generating the motion trajectory of the device as described in the above embodiments.

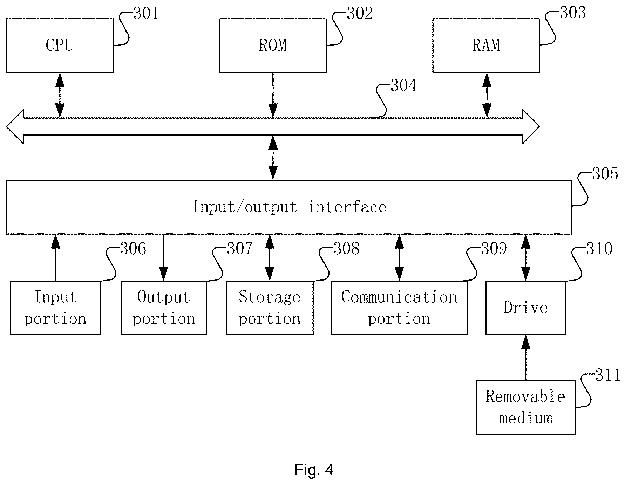

In an example, FIG. 4 is a structural diagram illustrating a computer system of an electronic device suitable for performing an embodiment of the present disclosure. It should be noted that the computer system of the electronic device shown in FIG. 4 is an example and should not impose any limitation on functions and scope of use of embodiments of the present disclosure.

As shown in FIG. 4, the computer system includes a central processing unit (CPU) 301 (i.e., the processor as described above), which can execute various appropriate actions and processes according to a program stored in a read-only memory (ROM) 302 or a program loaded into a random access memory (RAM) 303 from a storage portion 308, for example, executing the method described in the above embodiments. It should be understood that the RAM 303 and the ROM 302 are the storage devices as described above. In the RAM 303, various programs and data required for system operation are also stored. The CPU 301, the ROM 302, and the RAM 303 are connected to each other via a bus 304. An input/output (I/O) interface 305 is also connected to the bus 304.

The following components are connected to the I/O interface 305: an input portion 306 including a keyboard, a mouse, etc.; an output portion 307 including a cathode ray tube (CRT), a liquid crystal display (LCD), and a speaker, etc.; a storage portion 308 including a hard disk, etc.; and a communication portion 309 including a network interface card such as a local area network (LAN) card, a modem, etc. The communication portion 309 performs communication processing via a network such as the Internet. A drive 310 is also connected to the I/O interface 305 as needed. A removable medium 311, such as a magnetic disk, an optical disk, a magneto-optical disk, a semiconductor memory, etc., is installed in the drive 310 as needed, so that a computer program read therefrom is installed into the storage portion 308 as needed.

In particular, according to an embodiment of the present disclosure, the processes described above with reference to the flowcharts can be performed as a computer software program. For example, an embodiment of the present disclosure includes a computer program product, the computer program product includes a computer program carried on a computer-readable medium, and the computer program includes a computer program for performing a method shown in the flowchart. The computer program can be downloaded and installed from a network via the communication portion 309, and/or installed from the removable medium 311. When the computer program is executed by the central processing unit (CPU) 301, various functions defined in the system of the present disclosure are performed.

It should be noted that the computer-readable medium shown in an embodiment of the present disclosure can be a computer-readable signal medium or a non-transitory computer-readable storage medium, or any combination of the above two. The non-transitory computer-readable storage medium can be, for example, but not limited to, an electrical, magnetic, optical, electromagnetic, infrared, or semiconductor system, apparatus, or device, or any combination of the foregoing. More specific examples of the non-transitory computer-readable storage medium can include, but are not limited to, an electrical connection with one or more conductors, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination of the above. In an embodiment of the present disclosure, the non-transitory computer-readable storage medium can be any tangible medium that contains or stores a program for use by or in connection with an instruction execution system, apparatus, or device.

In an embodiment of the present disclosure, the computer-readable signal medium can include a data signal propagated in baseband or as part of a carrier wave, in which the computer-readable computer program is carried. The propagated data signal can take various forms, including but not limited to an electromagnetic signal, an optical signal, or any suitable combination of the foregoing. The computer-readable signal medium can also be any computer-readable medium other than a non-transitory computer-readable storage medium, and the non-transitory computer-readable storage medium can send, propagate, or transmit a program for use by or in connection with an instruction execution system, apparatus, or device. The computer program contained on the computer-readable medium can be transmitted by any suitable medium, including but not limited to: wireless, wired, or any suitable combination of the above.

Flowcharts and block diagrams in the accompanying drawings illustrate possible implementation architectures, functions, and operations of systems, methods, and computer program products according to various embodiments of the present disclosure. Each block in the flowchart or the block diagram may represent a module, a program segment, or a portion of code. The module, the program segment, or the portion of code includes one or more executable instructions for performing a specified logical function. It should also be noted that, in some alternative implementations, functions noted in the blocks can occur out of the order noted in the accompanying drawings. For example, two blocks shown in succession can actually be executed substantially in parallel, or can sometimes be executed in the reverse order, depending on functions involved. It should also be noted that each block of the block diagrams or flowcharts, and combinations of blocks in the block diagrams and/or flowcharts, can be performed by a dedicated hardware-based systems that performs specified functions or operations, or can be performed by a combination of dedicated hardware and computer instructions.

The units described in embodiments of the present disclosure can be performed by software or hardware, and the units described can also be configured in a processor. Names of these units do not constitute a limitation on the units themselves in some cases.

As another aspect, a computer-readable medium is also provides in an embodiment of the present disclosure. The computer-readable medium can be included in the electronic device described in the above embodiments, or can exist independently without being assembled into the electronic device. The computer-readable medium carries one or more programs that, when executed by an electronic device, cause the electronic device to perform the method described in the above embodiments.

It should be noted that although several modules or units of the device for action execution are mentioned in above the detailed description, such division is not mandatory. In fact, according to embodiments of the present disclosure, features and functions of two or more modules or units described above cab be embodied in one module or unit. Conversely, features and functions of one module or unit described above can be further divided into being embodied by a plurality of modules or units.

Through description of the above embodiments, those skilled in the art will easily understand that example implementations described herein can be performed by software, or by software in combination with necessary hardware. Thus, a technical solution according to embodiments of the present disclosure may be embodied in the form of a software product, the software product can be stored in a non-volatile storage medium (such as a CD-ROM, a USB flash drive, a mobile hard disk, etc.) or on a network, and include several instructions to cause a computing device (such as a personal computer, a server, a touch terminal, or a network device, etc.) to perform a method according to any one of the embodiments of the present disclosure.

After considering the specification and practicing the embodiments disclosed herein, those skilled in the art will readily conceive of other embodiments of the present disclosure. The present disclosure is intended to cover any modifications, uses, or adaptive changes of the present disclosure, which follow general principles of the present disclosure and include common knowledge or conventional technical means in the technical field not disclosed in the present disclosure.

It should be understood that the present disclosure is not limited to precise structures described above and shown in the accompanying drawings, and various modifications and changes can be made without departing from the scope of the present disclosure. The scope of the present disclosure is limited by appended claims.

## Claims

1. A method for generating a motion trajectory of a device, comprising:
obtaining a first coordinate of a wearable device, and obtaining step data and direction data generated by the wearable device;
determining a second coordinate of the wearable device based on the step data and the direction data; and
generating a motion trajectory of the wearable device based on the first coordinate and the second coordinate.

2. The method according to claim 1, wherein determining the second coordinate of the wearable device based on the step data and the direction data comprises:
calculating a current directional variation based on the direction data; and
determining the second coordinate based on the current directional variation, the step data, and the first coordinate.

3. The method according to claim 2, wherein calculating the current directional variation based on the direction data comprises:
determining a second angle indicating an orientation of the wearable device at the current position relative to a preset direction, and determining a first angle indicating an orientation of the wearable device corresponding to the user at a previous step relative to the preset direction; and
calculating the current directional variation based on the first angle and the second angle.

4. The method according to claim 3, wherein determining the second coordinate based on the current directional variation, the step data, and the first coordinate comprises:
obtaining a first component and a second component of the first coordinate; and
determining the second coordinate based on the first component, the second component, and
a component formed by a walking stride length in the step data and the current directional variation.

5. The method according to claim 4, wherein the method further comprises:
obtaining an acceleration value of the wearable device at a preset number of steps; and
determining the walking stride length of the wearable device based on the acceleration value and a preset corresponding relationship.

6. The method according to claim 1, wherein the method further comprises:
backtracking the motion trajectory of the wearable device to output a return trajectory between a first return node and a second return node.

7. The method according to claim 2, wherein the method further comprises:
backtracking the motion trajectory of the wearable device to output a return trajectory between a first return node and a second return node.

8. The method according to claim 3, wherein the method further comprises:
backtracking the motion trajectory of the wearable device to output a return trajectory between a first return node and a second return node.

9. The method according to claim 4, wherein the method further comprises:
backtracking the motion trajectory of the wearable device to output a return trajectory between a first return node and a second return node.

10. The method according to claim 5, wherein the method further comprises:
backtracking the motion trajectory of the wearable device to output a return trajectory between a first return node and a second return node.

11. The method according to claim 1, wherein the method comprises:
obtaining a walking stride length stored in the motion trajectory of the wearable device; and
when the walking stride length is consistent with a walking stride length of a current user, outputting the motion trajectory of the wearable device.

12. The method according to claim 2, wherein the method comprises:
obtaining a walking stride length stored in the motion trajectory of the wearable device; and
when the walking stride length is consistent with a walking stride length of a current user, outputting the motion trajectory of the wearable device.

13. The method according to claim 3, wherein the method comprises:
obtaining a walking stride length stored in the motion trajectory of the wearable device; and
when the walking stride length is consistent with a walking stride length of a current user, outputting the motion trajectory of the wearable device.

14. The method according to claim 4, wherein the method comprises:
obtaining a walking stride length stored in the motion trajectory of the wearable device; and
when the walking stride length is consistent with a walking stride length of a current user, outputting the motion trajectory of the wearable device.

15. The method according to claim 5, wherein the method comprises:
obtaining a walking stride length stored in the motion trajectory of the wearable device; and
when the walking stride length is consistent with a walking stride length of a current user, outputting the motion trajectory of the wearable device.

16. The method according to claim 1, wherein the method further comprises:
obtaining a current node coordinate of the wearable device in the motion trajectory of the wearable device, and obtaining a current coordinate of an interactive device interacting with the wearable device; and
determining a navigation trajectory between the current coordinate of the interactive device and the current node coordinate based on the current node coordinate and the current coordinate of the interactive device, and transmitting the navigation trajectory to the interactive device.

17. The method according to claim 2, wherein the method further comprises:
obtaining a current node coordinate of the wearable device in the motion trajectory of the wearable device, and obtaining a current coordinate of an interactive device interacting with the wearable device; and
determining a navigation trajectory between the current coordinate of the interactive device and the current node coordinate based on the current node coordinate and the current coordinate of the interactive device, and transmitting the navigation trajectory to the interactive device.

18. An apparatus for generating a motion trajectory of a device, comprising:
an obtaining module, configured to obtain a first coordinate of a wearable device, and obtain step data and direction data generated by the wearable device;
a coordinate module, configured to determine a second coordinate of the wearable device based on the step data and the direction data;
a trajectory module, configured to generate a motion trajectory of the wearable device based on the first coordinate and the second coordinate.

19. An electronic device, comprising:
one or more processors; and
a storage device for storing one or more programs that, when executed by the one or more processors, cause the one or more processors to perform a method for generating a motion trajectory of a device according to claim 1.

20. A computer-readable storage medium storing a computer program that, when executed by a processor, causes the processor to perform a method for generating a motion trajectory of a device according to claim 1.
